# EUROPÄISCHE PATENTSCHRIFT

(11) **EP 2 607 304 B1**
(45) Veröffentlichungstag und Bekanntmachung des Hinweises auf die Patenterteilung: **25.03.2015**
(21) Anmeldenummer: 11290609.4
(22) Anmeldetag: 23.12.2011
(51) Int. Cl.: C01B 17/02

(54) **Verfahren und Vorrichtung zur Entgasung von flüssigem Schwefel**
Method and device for removing gas from liquid sulphur
Procédé et dispositif de dégazage de soufre liquide

(43) Veröffentlichungstag der Anmeldung: 26.06.2013
(73) Patentinhaber: Air Liquide Global E&C Solutions Germany GmbH, 60439 Frankfurt am Main (DE); NGD consult, 64000 Pau (FR)
(72) Erfinder: Nougayrede, Jean, 64000 Pau (FR); Nehb, Wolfgang, 60439 Frankfurt (DE); Jüngst, Eckhard, 60435 Frankfurt (DE)
(74) Vertreter: Keil & Schaafhausen Patent- und Rechtsanwälte

(56) Entgegenhaltungen:
- GB-A- 2 203 732
- US-A- 5 030 438
- US-A- 6 010 677
- US-B2- 7 927 577

## Beschreibung

Die Erfindung betrifft ein Verfahren zur Entgasung von flüssigem Schwefel in einem, zwei aneinander angrenzende Bereiche aufweisenden Behälter, wobei ein erster Bereich des Behälters mit flüssigem Schwefel und ein zweiter Bereich des Behälters mit einem Gas geflutet ist, und wobei ein Gasstrom in den ersten Bereich eingedüst wird, sowie eine Vorrichtung zur Entgasung von flüssigem Schwefel unter Anwendung des erfindungsgemäßen Verfahren.

In Flüssigkeiten gelöste Gase bergen stets die Gefahr verstärkter Korrosion in der Anlage. In Flüssigschwefel finden sich gasförmige Verunreinigungen insbesondere in Form von H₂S (Schwefelwasserstoff), H₂Sₓ (Polyschwefelwasserstoffe), SO₂ (Schwefeldioxid) und ggf. anderen gasförmigen Schwefelverbindungen.

H₂S ist eine sehr gefährliche Verbindung, da sie in einer Konzentration von weniger als 10 Vol.-ppm in der Luft giftig ist und bei einer Konzentration von einigen 100 Vol.-ppm tödlich wirkt. Außerdem kann sich beim Erreichen einer Konzentration von > 3,4 Vol.-% Schwefelwasserstoff in der Luft ein explosives Gemisch bilden.

H₂S hat die Neigung, aus dem Flüssigschwefel auszugasen, wenn dieser geschüttelt und gekühlt wird, was insbesondere bei der Handhabung, der Lagerung und beim Transport geschieht. Das gefährliche Gas sammelt sich dann in der gasförmigen Phase der Speicher- und Transportbehälter an. Wird aus nicht entgastem Flüssigschwefel fester Schwefel hergestellt, gast H₂S und SO₂ ebenfalls auf natürliche Weise aus dem Schwefel aus. In beiden Fällen stellt nicht entgaster flüssiger Schwefel also eine Quelle für flüchtige H₂S- und SO₂-Emission in den Lagerbereichen dar und verursacht so nicht nur Schadstoffbelästigungen sowie Umweltverschmutzung sondern ist auch ein erhebliches Sicherheitsrisiko.

Aus all diesen Gründen ist es erforderlich, das H₂S durch Entgasung aus dem erzeugten Rohschwefel zu entfernen, um alle Risiken der Toxizität, der Brandentstehung und der Explosionsgefahr bei Handhabung, Lagerung und Transport vorzubeugen.

Die mit Schwefel befassten Industrieunternehmen (Erzeuger, Spediteure und Endverbraucher) haben sich auf internationale Regelungen geeinigt, die die Spezifikation des Handelsproduktes festlegen, und dort unter anderem den Gesamtrestgehalt an Schwefelwasserstoff auf maximal 10 Gew.-ppm begrenzt.

Es ist eine Reihe von Verfahren bekannt, mit denen der Gehalt an Schwefelwasserstoff in dem flüssigen Schwefel auf unter 10 ppm gesenkt werden soll.

Bei dem D'GAASS-Verfahren, wie es beispielsweise in der WO 95/07854 A beschrieben ist, wird Schwefel in einer Kolonne mit mehreren Trennstufen im Gegenstrom zu Druckluft geführt. Der Phasentransport wird durch Kolonneneinbauten zur Erhöhung der Kontaktfläche erleichtert.

Im Shell-Entgasungsprozess (vgl. z.B. US-Patent 6,149,887) wird der Phasenübergang von der Flüssigkeit in die Gasphase durch Einperlen von Luft in den Schwefel erleichtert. Durch Luftspülung wird das H₂S zusammen mit der eingeperlten Luft der Nachverbrennung zugeführt. Ähnlich funktioniert auch die Exxon Mobil Entgasungstechnologie (vgl. bspw. US 7,927,577 B2). Auch hier findet sich eine Vielzahl von Venturi-Düsen am Boden eines Behälters, der zumindest teilweise mit flüssigem Schwefel geflutet ist und durch den das durch die Düsen eingeleitete Stripp-Gas in kleinen Blasen perlt und so dem flüssigen Schwefel gelösten Schwefelwasserstoff entzieht.

Weitere Verfahren, die auf eine Entgasung des flüssigen Schwefels mit einem Stripp-Gas beruhen, sind beispielsweise in der US 6,149,887 oder der WO 03/106335 A1 beschrieben. In der US 6,149,887 wird ein Gas durch den flüssigen Schwefel geführt, wobei der flüssige Schwefel selbst ebenfalls umgepumpt wird. Er passiert dabei mindestens zwei Entgasungsräume, wobei diese Entgasungsräume jeweils wieder in mindestens zwei Unterräume geteilt sind und die Entgasungsräume durch mindestens eine Trennwand voneinander getrennt sind. In wenigstens einen der Unterräume wird dann das Gas über den Boden in fein verteilter Form eingedüst. Durch Öffnungen zwischen Unterräumen und den Entgasungsräumen entsteht eine Strömung des flüssigen Schwefels, wodurch die Übergangsbedingungen an der Gas-Flüssigkeits-Grenzfläche begünstigt sind.

Die WO 03/106335 A1 beschreibt schließlich ein Verfahren zur Entfernung von Schwefelwasserstoffen aus flüssigem Schwefel, bei dem flüssiger Schwefel von oben nach unten in einen Behälter eingebracht wird und über einen Auslass an der unteren Seite der Vorrichtung in einen Außenring strömt, der mit Luft begast wird.

Alle diese Verfahren haben gemeinsam, dass kein zusätzliches Entgasungsmittel in den flüssigen Schwefel eingebracht werden kann. Bei geeigneter Verfahrensführung kann so dennoch der Schwefelwasserstoffgehalt unter den gesetzlich geforderten Grenzwert von 10 Vol.-ppm gesenkt werden, wobei jedoch Luft als Stripp-Gas verwendet werden muss.

Die Verwendung von Luft führt neben gewünschten Reaktionen im System auch zu einer direkten Oxidation von H₂S und H₂Sₓ sowie dem Schwefel selbst, wodurch abhängig von der Temperatur SO₂ in einer Menge von bis zu mehreren 100 Gew.-ppm in gelöstem Zustand im Schwefel entstehen.

Ein Teil des SO₂ findet sich in der Stripp-Luft zusammen mit dem ausgegasten H₂S wieder, was zu den Schwefelverlusten des Gesamtverfahrens beiträgt.

Durch die Einbringung des in der Luft enthaltenen Sauerstoffes sowie durch die Bildung von Schwefeldioxid finden überdies noch weitere Oxidationsreaktionen statt. Als Folge daraus wird der im System enthaltene Anteil an SO₃ und anderen hochgradigen Oxidationsprodukten, nämlich Schwefel in einer Oxidationsstufe von 6+ (H₂SO₄, Polythionsäuren, etc.) deutlich erhöht, was wiederum zu einer Zunahme der Azidität des Schwefels und der sich daraus ergebenden Korrosivität führt.

Die beschriebenen Verfahren zur Entgasung erfordern in der Regel sehr lange Entgasungszeiten (10 bis 20 Stunden), was zu einer vermehrten SO₂-Bildung führt.

Wird hingegen Inertgas als Stripp-Gas verwendet, können alle Schwefelverbindungen nicht zuverlässig entfernt werden. Diese können bei der weiteren Verwendung des flüssigen Schwefels zerfallen, wodurch neues H₂S gebildet wird. Eine Entgasung, die also nur kurzfristig den Schwefelwasserstoff, nicht jedoch die Polyschwefelwasserstoffe entfernt, ist daher nicht geeignet, flüssigen Schwefel so aufzubereiten, dass die gesetzlichen Grenzwerte von verbleibendem H₂S dauerhaft eingehalten werden.

Aus diesem Grund wurde eine Reihe von Verfahren zur Entgasung von flüssigem Schwefel entwickelt, die einen Katalysator nutzen. Bekannt ist hier vor allem das Aquisulf^{®}-Verfahren (vgl. EP 0 252 836 B1). Hierbei werden Polysulfidketten katalytisch zerstört, wobei der Aquisulf^{®}-Liquid-Katalysator zur Anwendung kommt. Das dadurch entstehende sowie das gelöste H₂S werden von der flüssigen in die gasförmige Phase transportiert, indem man den Schwefel mittels Pumpen und Sprühdüsen in Kammern zerstäubt.

Auch die DE 28 42 141 A1 beschreibt ein Verfahren zur Entgasung von Flüssigschwefel unter Verwendung eines Katalysators. Dabei wird eine dreistufige Kolonne mit einem ammoniakhaltigen Stickstoffgas gespült und die einzelnen Stufen im Gleichstrom mit Schwefel und Gasgemisch beschickt.

Die Verwendung von Ammoniak führt jedoch zu nachhaltigen Schädigungen an den Anlagenteilen.

Es ist daher Aufgabe der vorliegenden Erfindung, ein Verfahren bereitzustellen, bei dem gelöstes H₂S ebenso wie andere im System enthaltene Polyschwefelwasserstoffe zuverlässig entfernt werden, die Bildung von SO₂ gering gehalten und gleichzeitig die Verwendung eines Katalysators entbehrlich wird.

Diese Aufgabe wird mit der Erfindung durch ein Verfahren mit den Merkmalen des Anspruchs 1 und durch eine Vorrichtung gemäß Anspruch 6 gelöst.

Im kontinuierlichen Verfahren erfolgt die Entgasung in mehreren, bevorzugt zwei Kammern, wobei der Rohschwefel in die erste Kammer eintritt, in der er kontinuierlich zerstäubt wird. Durch eine Öffnung in der Trennwand, bevorzugt am Boden des Behälters, fließt dann der flüssige Schwefel in eine zweite Kammer. In der zweiten Kammer wird der Schwefel durch eine Zirkulationspumpe in Bewegung gehalten, wobei die Zerstäubung des Rohschwefels in dem Gasbereich der zweiten Kammer erfolgt. Aus der zweiten Kammer wird dann auch der entgaste Schwefel kontinuierlich abgezogen.

Ein erster Bereich eines Behälters mit flüssigem Schwefel und ein zweiter Bereich des Behälters über der flüssigen Phase wird mit einem Gas geflutet. In den ersten Bereich wird ein Gasstrom eingedüst, wobei diese Eindüsung in bevorzugter Weise so erfolgt, dass sich eine Vielzahl von möglichst kleinen Gasbläschen bilden. Zudem wird in den zweiten, mit Gas gefluteten Bereich flüssiger Schwefel eingesprüht, wobei diese Einsprühung so erfolgt, dass der Schwefel möglichst fein zerstäubt wird.

Der flüssige Schwefel, der in den zweiten Bereich eingesprüht wird, stammt aus dem ersten Bereich und wird aus diesem in die Einrichtung zum Versprühen gepumpt. Dadurch entsteht eine Strömung innerhalb des flüssigen Schwefels, was eine Durchmischung des Systems und somit ein homogenes Entgasen sicherstellt.

In dem erfindungsgemäßen Verfahren werden nun die Übergangsbedingungen für die Gasdiffusion von der flüssigen in die gasförmige Phase dahingehend begünstigt, dass die Gas-Flüssigkeitsgrenzflächen zum einen insgesamt hinsichtlich der Kontaktfläche vergrößert werden, zum anderen jedoch Grenzflächen geschaffen werden, die sich insbesondere hinsichtlich der jeweiligen Konzentration unterscheiden. Es werden nun erstmals drei Typen von Grenzflächen geschaffen, nämlich
1. diejenige Grenzfläche, die durch das Durchperlen des flüssigen Schwefels mit Stripping-Gas gebildet wird,
2. diejenige Grenzfläche, die sich an der Trennfläche zwischen Schwefel und Gasphase ausbildet, und
3. diejenige Grenzfläche, die durch Zerstäubung des Schwefels in die Gasphase gebildet wird.

Mit diesem Verfahren können vor allem H₂S, aber auch SO₂ zuverlässig aus dem flüssigen Schwefel entfernt werden. Die Kombination einer H₂S und SO₂-Entfernung ist so möglich.

Bei der Schwefelentgasung mit Luft entsteht abhängig von verschiedenen Verfahrensparametern eine unterschiedliche Menge SO₂, wobei ein Teil des SO₂ in gelöstem Zustand im Schwefel verbleibt (ca. 100 Gew.-ppm).

Schwefeldioxid ist ein äußerst giftiges, gefährliches und umweltschädigendes Produkt. Es verursacht flüchtige Emissionen und Ansammlungen von Schwefeldioxid in der Umgebung von Flüssig- und Festschwefelanlagen, weshalb diese Anlagen mit geeigneten Lüftungsanlagen und Vorrichtungen zur Kontrolle dieser Emission ausgerüstet werden müssen. Dies gilt insbesondere für Anlagen zur Speicherung von gekörntem Festschwefel. Dasselbe Problem tritt auch bei Transportmitteln auf. Aus diesen den Umweltschutz betreffenden Gründen und je nach Verwendung des Schwefels weiteren Anforderungen kann es erforderlich sein, zusätzlich zum Schwefelwasserstoff auch das Schwefeldioxid im Flüssigschwefel zu minimieren. Durch das erfindungsgemäße Verfahren wird, in einem zusätzlichen und abschließenden Entgasungsschritt der Schwefelbehandlung nach dem H₂S-Entgasen mit Luft auch das SO₂ durch Entgasen entfernt.

Die Entfernung des SO₂ durch Entgasung erfolgt nach demselben Prinzip wie die Entgasung bezüglich H₂S. Auch hier wird Schwefel innerhalb eines mit Gas gefluteten Bereiches zerstäubt und der an diesen Gasbereich angrenzende Bereich mit Flüssigschwefel wird mit Stripping-Gas durchperlt. Als Stripping-Gas wird hierbei Inertgas verwendet. Günstig ist es hierbei, ein Restgas aus einer Schwefelproduktionsanlage oder einer angeschlossenen Restgasaufbereitungsanlage (TGT) (vorzugsweise Rückstandsgase aus einer TGT-Anlage vom Typ SCOT bzw. LTGT, die mit Aminen gespülte und vollständig SO₂-freie Rückstandsgase mit einem H₂S-Gehalt von ca. 100 bis 300 Vol.-ppm liefern) zu verwenden. Das Stripping-Inertgas aus der Entfernung von SO₂ kann nach der SO₂-Entfernung als ein das entfernte SO₂ enthaltender Gasstrom in den mit Gas gefluteten zweiten Bereich der vorgeschalteten H₂S-Entfernung geleitet werden.

Die Abläufe dieses Verfahrens sollen im Folgenden kurz erläutert werden. In dem aus der Produktion kommenden Rohschwefel liegt das H₂S in zwei Formen vor: freies physikalisch gelöstes H₂S und H₂Sₓ (Sulfane oder Polyschwefelwasserstoffe). Abhängig von den Produktionsbedingungen des Schwefels liegt der Gesamtgehalt von H₂S in beiden Formen zwischen 250 und 500 Gew.-ppm bezogen auf den Gesamtgehalt an Schwefel.

Der freie Schwefelwasserstoff und die Polyschwefelwasserstoffe sind durch das folgende chemische Gleichgewicht miteinander verbunden:

H₂Sₓ ↔ H₂S+Sₓ₋₁

Die Entgasung hat den Zweck, das freie H₂S und das in Form von Polyschwefelwasserstoffen vorliegende H₂S zu entfernen. Das Verhältnis zwischen Schwefelwasserstoff und Polyschwefelwasserstoffen innerhalb des flüssigen Schwefels schwankt abhängig von der Temperatur, wobei es sich mit steigender Temperatur erhöht (20:80 Gew.-% bei 130 °C, 50:50 Gew.-% bei 150 °C).

Entsprechend diesem Gleichgewicht begünstigt die Abnahme des Schwefelwasserstoffpartialdruckes den Abbau der Sulfane, was durch das Gas-Strippen des Schwefels angestrebt wird. Aufgrund des chemischen Gleichgewichtes wird die Abbaukinetik der Polyschwefelwasserstoffe zum wichtigsten Parameter, der die Wirksamkeit des Entgasungsverfahrens begrenzt. Dieser Parameter ist insbesondere für die Dauer des Entgasungsvorgangs entscheidend.

Einfluss auf die Abbaukinetik der H₂Sₓ hat die chemische Beschaffenheit des im ersten Bereich verwendeten Stripp-Gases und des den zweiten Bereich flutenden Gases, wobei in beiden Bereichen unabhängig voneinander zwei verschiedene Gastypen zur Anwendung kommen können:

Als erster Typ sind Inertgase zu nennen, also Gase, die keine chemische Reaktion mit dem Schwefel und den darin enthaltenen Verunreinigungen eingehen. Typische Inertgase sind N₂, CO₂ oder Rückstandsgase aus einer Schwefelproduktionsanlage (z.B. Claus-Einheiten, angeschlossene Restgasaufbereitung), und zwar unter der Bedingung, dass diese Gase nicht mehr als etwa 5.000 Vol.-ppm Restschwefelverbindungen wie H₂S enthalten. Wasserdampf kann ebenfalls verwendet werden, wird jedoch vorzugsweise mit Inertgasen vermischt. Bei diesen Stripp-Gasen wird die Wirksamkeit des Strippens ausschließlich durch die physikalischen Bedingungen der Diffusion des Schwefelwasserstoffes durch die Gas-Flüssigkeitstrennschicht bestimmt. Durch die Schaffung dreier verschiedener Grenzflächen kann Schwefelwasserstoff dem System schneller entzogen werden, wodurch in Folge der Gleichgewichtsreaktion Polyschwefelwasserstoffe zur Bildung von neuem Schwefelwasserstoff zerfallen.

Als zweiter Gastyp können auch reaktive Gase eingesetzt werden, die zusätzlich zu der Stripp-Wirkung Reaktionspartner mit dem Schwefel und/oder den darin enthaltenen Verunreinigungen sind. Das wirksamste und gleichzeitig billigste Stripp-Gas ist hierbei Luft. Außer der physikalischen Wirkung des Stripp-Vorgangs auf die Entfernung des Schwefelwasserstoffes erfolgen direkte Oxidationsreaktionen des H₂S und der H₂Sₓ, durch die das Gleichgewicht mehr in Richtung der Abbauseite verschoben wird. Auf diesen Reaktionsabläufen baut das Konzept des reaktiven Strippens auf.

Die Oxidationsprodukte (SO₂, SO₃, Thionsäuren) werden von manchen Autoren als Initiatoren der Zersetzung der Polyschwefelwasserstoffe bezeichnet. Die Chemie des Luft-Schwefels-Systems ist komplex und wird durch die folgenden (stöchiometrisch nicht korrekten) Reaktionsgleichungen nur vereinfacht dargestellt:

H₂S/H₂Sₓ + O₂ ↔ S, SO₂, SO₃, H₂O

S + O₂ ↔ SO₂, SO₃

2 H₂S + SO₂ ↔ 3 S + H₂O

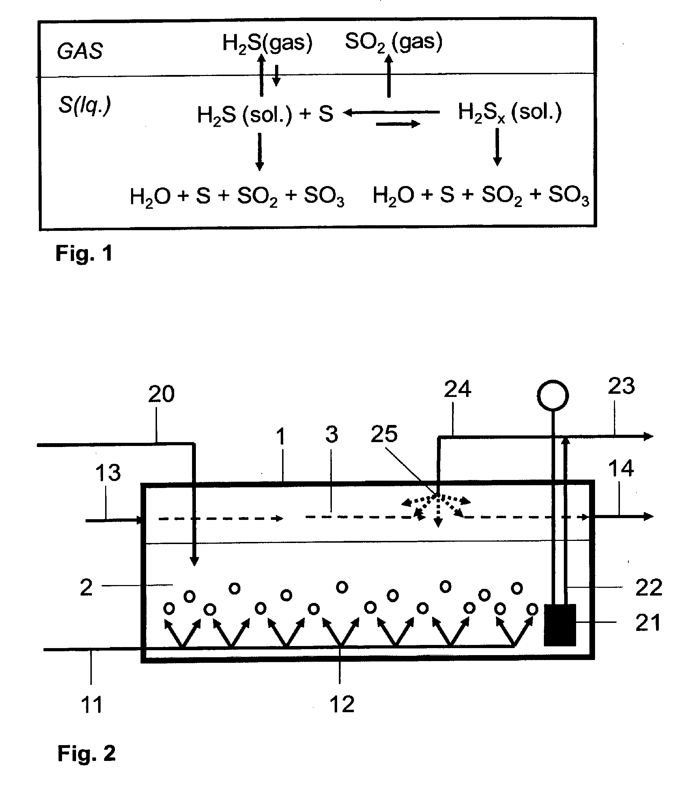

Diese chemischen Abläufe und physikalischen Austauschvorgänge zwischen Gas und Flüssigkeitsphasen werden in Figur 1 schematisch veranschaulicht.

Beim Luft-Strippen wird die Gesamtkinetik der Entgasung spürbar durch die Oxidationsreaktionen beschleunigt. Unter gleichen Stripp-Bedingungen (Gas-Flüssigkeits-Diffusion) ermöglicht es die Luft, schneller die vorgegebenen 10 Gew.-ppm für Rest-H₂S zu erreichen. Das Strippen kann in kürzerer Zeit und in kleineren Anlagen erfolgen. Allerdings wirkt sich die Verwendung von Luft aufgrund der Bildung von SO₂ nachteilig auf die Schwefelqualität aus, da zum einen Schwefel ausgetragen wird und sich zum anderen Oxidationsprodukte bilden, die zu einer Zunahme der Azidität und damit der Korrosivität führen. Durch die Bildung dreier verschiedener Grenzflächen kann die Verweilzeit im System jedoch deutlich gesenkt werden, weshalb der Eintrag an Sauerstoff minimiert wird.

Grundsätzlich ist es dabei denkbar, dass sich der in den flüssigen Schwefel des ersten Bereiches eingebrachte Gasstrom in seiner Beschaffenheit von dem den zweiten Bereich durchströmenden Gasstrom unterscheidet. Um die Bildung von SO₂ zu minimieren oder ganz zu verhindern, ist es insbesondere möglich, das Durchperlen mit Inertgas vorzunehmen. Dabei ist es möglich, nur den zur Durchperlung genutzten Gasstrom mit Inertgasen zu beschicken und/oder den sich im zweiten Bereich befindenden Gasstrom mit Inertgasen zu beschicken. Dies hat den Vorteil, dass der Eintrag von großen Mengen Sauerstoff beim Durchperlen vermindert werden kann.

Die Verwendung desselben Gases für alle Gasströme reduziert hingegen die Anzahl der benötigten Versorgungseinrichtungen und senkt somit die Investitionskosten.

Vorteilhaft ist es weiterhin, wenn der zweite, mit Gas geflutete Bereich von einem Gasstrom durchströmt wird, wobei diese Durchströmung in besonders bevorzugter Weise hauptsächlich parallel zur Oberfläche des flüssigen Schwefels erfolgen sollte. Dadurch wird sichergestellt, dass das Konzentrationsgefälle sowohl hinsichtlich des Grenzbereiches zwischen den beiden Bereichen als auch hinsichtlich der durch das Einsprühen des Schwefels entstehenden Grenzfläche maximiert ist und in der Gasphase enthaltener Schwefelwasserstoff nicht zurück in den flüssigen Schwefel gelangt.

Eine besonders gute Zerstäubung und vollständige Durchmischung wird erreicht, wenn das Einsprühen des flüssigen Schwefels in den zweiten Bereich im Gegenstrom zu dem den zweiten Bereich durchströmenden Gasstrom erfolgt.

Weiterhin ist es möglich, Schwefels diskontinuierlich im Batchverfahren zu entgasen. Ein solches Verfahren umfasst nacheinander die vorherigen Vorgänge:
1. Füllen des Behälters mit dem zu entgasenden Schwefel.
2. Entgasung des Schwefels durch Durchperlen mit Gas und Zerstäuben des Schwefels, vorzugsweise auch mit Rezirkulation des Schwefels und Spülen des zweiten Bereiches bis zum Erreichen des erforderlichen H₂S-Restgehaltes im Schwefel.
3. Entleeren des entgasten Schwefels aus dem Behälter.

Die Gesamtentgasungsdauer eines solchen Schwefelbatches beträgt typischerweise 6 bis 12 Stunden je nach Bemessung der Systeme. insbesondere je nach der Rezirkulationsleistung der Pumpe zum Umpumpen des Schwefels, der Durchperl-Strippingleistung und einem möglichen zusätzlich verwendeten Katalysator.

Das erfindungsgemäße Verfahren wird als kontinuierliches Verfahren durchgeführt. Dazu wird das Verfahren so durchgeführt wie das Batchverfahren, jedoch wird ständig Rohschwefel in den Entgasungsbehälter zugeführt und eine entsprechende Menge behandelter Schwefel abgeführt.

Der Gasstrom, der in dem mit Gas gefluteten Bereich strömt, muss nicht gesondert gepumpt werden, sondern es reicht eine Bereitstellung bei atmosphärischem Druck, da in dem zweiten Bereich der ersten Kammer durch das kontinuierliche Abziehen des Gases ein Unterdruck entsteht.

Die Spül- und Durchperlgase mischen sich oberhalb des Schwefels in dem zuerst gefluteten Bereich und werden mit den Entgasungsprodukten, hauptsächlich H₂S, abgezogen. Bevorzugt wird hierzu ein auf einem Ejektor basierendes Dampfstrahlsystem, das die Gase ansaugt und mitnimmt, verwendet. In der Regel werden solche Gase zu einer Verbrennungsanlage (eine Brennkammer oder ein Reaktionsofen der dem Prozess zugeordneten Claus-Einheit) geleitet.

Grundsätzlich ist es weiterhin auch möglich, zusätzlich eine katalytische Entgasung vorzunehmen. Dies ist besonders dann zu empfehlen, wenn das Strippen mit Inertgasen erfolgt und so die Oxidationsreaktionen fehlen. Es gibt Katalysatoren, die vorteilhaft zur Beschleunigung der Entgasung im Verfahren eingesetzt werden können, da sie den Abbau von Polyschwefelwasserstoffen befördern. Die wirksamsten Katalysatoren sind Verbindungen, die durch ihre chemische Basenfunktion gekennzeichnet sind, und zwar Stickstoffverbindung vom Aminotyp im Allgemeinen, insbesondere Ammoniak, Harnstoff, Sekundär- und Tertiäramine (schwache Basen), Heterocyclische Stickstoffverbindungen, Chinolin (C₉H₇N) und Morpholine (C₄H₉NO), oder feste Katalysatoren auf Aluminiumoxidbasis (Al₂O₃), insbesondere aktivierte Aluminiumoxide, mit Fe-, Ni-, Ti-Salzen dotierte Aluminiumoxide.

Ein weiterer entscheidender Parameter für den Ablauf des erfindungsgemäßen Verfahrens ist die Temperatur des Flüssigschwefels. Der Gehalt an in Flüssigschwefel gelösten H₂S und H₂Sₓ hängt stark von der Temperatur ab. Wegen des chemischen Gleichgewichtes zwischen den Sulfanen und dem Schwefelwasserstoff folgt diese Abhängigkeit nicht dem normalen physikalischen Absorptionsgesetz. Unter der Wirkung der Zunahme der Sulfane steigt die Menge an Gesamtgehalt H₂S mit der Temperatur an. Liegen beide Stoffe im Gleichgewicht vor, beträgt das Gewichtsverhältnis H₂Sₓ zu H₂S bei 150 °C ca. 50:50, bei 130 °C jedoch nur ca. 20:80. Die Kühlung des Schwefels unter Verringerung des Sulfananteils erleichtert folglich die Entgasung. Im Falle einer zu hohen Temperatur des Rohschwefels ( > 140 °C) kann diese Kühlung in den vorgeschlagenen Prozess einbezogen werden. Der Schwefel wird dabei vorzugsweise auf eine Temperatur zwischen 130 und 135 °C gebracht. Bevorzugt erfolgt eine Kühlung ebenfalls bei der Rezirkulation des Schwefels, so dass der Schwefel gekühlt wird, wenn er aus dem Bereich 1 zur Zerstäubung in den Bereich 2 gepumpt wird.

Das Verfahren kann in Bezug auf die Entfernung von SO₂ dahingehend optimiert werden, dass der Schwefel erhitzt und so die Löslichkeit des Schwefeldioxids herabgesetzt wird. Dabei sollte eine Erhitzung auf eine Temperatur von maximal 160°C (ein für die Viskosität von flüssigem Schwefel annehmbarer Grenzwert), bevorzugt 150 bis 160 °C erfolgen. Es hat sich dabei als günstig herausgestellt, eine solche Erwärmung des Schwefels im Rahmen der Rezirkulation des Schwefels zu den Zerstäubern durchzuführen.

Mit dem erfindungsgemäßen Verfahren kann die Gesamtentgasung des Schwefels so erfolgreich durchgeführt werden, dass Restwerte des kumulierten H₂S+SO₂-Gehaltes zwischen 10 und 20 Gew.-ppm liegen.

Weiterhin hat es sich als günstig herausgestellt, die Menge an H₂S und/oder SO₂ als Steuer- oder Regelgröße für die Verweilzeit des flüssigen Schwefels in der Entgasung zu verwenden.

Die Erfindung umfasst weiterhin eine zur Durchführung des erfindungsgemäßen Verfahrens geeignete Vorrichtung mit den Merkmalen des Anspruchs 6.

Der Behälter ist in wenigstens zwei Kammern aufgeteilt, wobei in die erste Kammer Rohschwefel ständig zugeführt wird und aus der letzten, bevorzugt der zweiten Kammer eine entsprechende Menge behandelten Schwefels ständig abgeführt wird. Jede Kammer ist mit einem Pumpsystem bestehend aus einer Rezirkulationspumpe und einem Zerstäubungssystem ausgerüstet. Der beispielsweise aus einer Claus-Anlage ausgeleitete Rohschwefel tritt in die erste Kammer ein, wo er kontinuierlich von dem Pumpsystem angezogen und in den zweiten Bereich zerstäubt wird. Durch eine Öffnung in der Trennwand, am Boden des Raums kann der Schwefel in die zweite Kammer eintreten. In der zweiten Kammer findet sich ein identisches Pumpsystem. Durch einen Teilstrom der Rezirkulationspumpe wird der entgaste Schwefel kontinuierlich abgezogen.

Eine solche Vorrichtung weist einen Behälter auf, in dem sich zwei aneinander angrenzende Bereiche befinden. Der erste dieser Bereiche ist mit flüssigem Schwefel und der zweite Bereich mit einem Gas geflutet. In den ersten, mit flüssigem Schwefel gefüllten Bereich wird ein Gasstrom eingedüst. Bevorzugt erfolgt die Eindüsung durch eine Vielzahl von Düsen, so dass eine Durchperlung des Schwefels mit Stripping-Gas erfolgt. Als besonders günstig hat es sich herausgestellt, diese Eindüsung in Bodennähe des Behälters durchzuführen. Weiterhin mündet in den zweiten Bereich eine Vorrichtung zum Einsprühen von flüssigem Schwefel, wobei das Einsprühen so erfolgen sollte, dass der flüssige Schwefel fein zerstäubt in diese Gasphase gelangt.

Um das in dem System vorhandene und eventuell zusätzlich entstandene SO₂ zu entfernen, ist, eine SO₂-Entgasung an die H₂S-Entgasung nachgeschaltet.

Diese ist innerhalb des gleichen Behälters vorgesehen, was dadurch erreicht wird, dass der Behälter eine nachgeschaltete Kammer (bei der Verwendung von ursprünglich zwei Kammern die dritte Kammer) zur Entfernung von SO₂ aufweist. Diese dritte Kammer grenzt an die zweite Kammer an und ist durch eine Trennwand getrennt, die jedoch im bevorzugt unteren Teil offen ist, so dass eine ständige Förderung des Schwefels zwischen der zweiten und der dritten Kammer ermöglicht wird. Auch in dem zweiten, mit Gas gefluteten Bereich ist vorgesehen, dass die Trennwand nicht bündig abschließt, so dass ein offener, bevorzugt im oberen Teil angesiedelter Bereich vorhanden ist, damit ein eintretender Gasstrom aus der dritten Kammer in die zweite und erste Kammer strömen kann. Jede Kamer weist somit einen ersten Bereich mit flüssigem Schwefel und einen zweiten, mit Gas gefluteten Bereich auf.

Die Vorrichtung ist also so ausgelegt, dass die Diffusion des H₂S von der flüssigen Phase zum Gas hin durch Verbesserung der Übergangsbedingungen an der Gas-Flüssigkeits-Grenzfläche und durch Vergrößerung der Gas-Flüssigkeits-Gesamtkontaktfläche begünstigt wird. Die Stripping-Vorrichtung besteht aus drei kombinierten und integrierten Kontaktsystemen:
1. Einem Kontaktsystem durch Durchperlen mit Stripping-Gas in der Schwefelmasse mit Hilfe von Diffusoren, bevorzugt Stahlapparat-Diffusoren, die vorzugsweise am Boden der Kammer angeordnet sind. Das Gas wird in Form von Blasen im Flüssigschwefel, der die Dauerphase des Systems bildet, dispergiert. Der Kontakt Gas/Schwefel erfolgt im Gegenstrom.
2. Einem Kontaktsystem durch Zerstäubung des Schwefels in der Gasphase. Der Schwefel wird in Form von Tröpfchen in das Gas, dass die Dauerphase bildet, dispergiert. Bevorzugt strömt die Gasphase durch den Nebel des zerstäubten Schwefels.
3. Einem Kontaktsystem an der Trennfläche zwischen Schwefel und Gasphase. Diese Fläche wird durch Zerstäubung des Schwefels und das Platzen der an der Oberfläche auftretenden Stripping-Gasblasen ständig erneuert.

Die Kontaktsysteme sind in einer Schwefel-Rezirkulationsschleife angeordnet, die durch eine Pumpe in Gang gehalten wird, die den Schwefel nacheinander zu dem Zerstäubungs- und dem Durchperlsystem transportiert. Die Pumpe nimmt den Schwefel, bevorzugt in Bodennähe des Behälters, auf und fördert ihn zur Zerstäubungsvorrichtung. Die beiden Systeme sind so in einer einzigen Schwefel-Rezirkulationsschleife angeordnet.

Die Auslegung und Bemessung der Anlage hängt von der Art und Weise der industriellen Realisierung des Verfahrens ab. Die Bemessungsparameter sind:
- Das Schwefelvolumen im Entgasungsbehälter; dieses bestimmt bei einem kontinuierlichen Verfahren die erforderliche Verweilzeit des Schwefels für die Reaktionen und insbesondere den Abbau der Polyschwefelwasserstoffe (deren Kinetik langsamer und daher ein für die Entgasungsleistung einschränkender Faktor ist)
- Die Stripping-Gas-Durchperl- und Spülgasmengen
- Die Rezirkulationsmenge (R) des Schwefels mit der Pumpe (P)
- Die Dispersionsweise der Gasblasen in der Flüssigphase
- Die Art der Teilung der zerstäubten Tröpfchen in der Gasphase.

Weiterhin hat es sich als günstig herausgestellt, den zweiten, mit Gas gefluteten Bereich mit einer Zu- und einer Auslassgasleitung auszustatten, wodurch ein weiterer Gasstrom, bevorzugt parallel zur Oberfläche des flüssigen Schwefels, durch den zweiten Bereich geführt wird. Dadurch wird zum einen der StrippEffekt an der Trennfläche zwischen Schwefel- und Gasphase verstärkt, da das Spülgas nun die Oberfläche des flüssigen Schwefels bestreicht. Zum anderen ist es so möglich, die Zerstäubung des Schwefels im Gegenstrom zum Spülgas durchzuführen.

Es ist möglich, ein Schwefelentgasungsverfahren in einer Batch-Entgasung durchzuführen. Die Behandlung des Flüssigschwefels erfolgt dabei absatzweise. Eine Pumpe fördert den Schwefel zu dem Stripping-System, in dem eine dreifache Entgasung erfolgt, nämlich
1. durch Zerstäubung des Schwefels im Spülgas,
2. durch direktes Durchperlen des Gases durch den Schwefel und
3. durch Kontakt von Spülgas und flüssigem Schwefel an der Grenzfläche zwischen dem ersten und dem zweiten Bereich.

Die das ausgegaste (H₂S) und das entstandene und ausgegaste (SO₂) enthaltenden Stripp-Gase werden über ein Ausleitsystem (z.B. einen Ejektor-Dampfstrahler) aus dem Behälter abgezogen und zumeist zu einer Verbrennungsanlage geleitet.

Die Entgasung erfolgt in einem geschlossenen Raum, meistens ein Schacht aus säurefestem Beton und Stein oder einem Stahlbehälter.

Das Stripping-Gas wird vorzugsweise gleichzeitig durch zwei verschiedene Systeme eingeleitet. Zum einen durch die Ein- und Auslassleitung, die jeweils in den zweiten, mit Gas gefluteten Bereich münden, und zum anderen durch ein Gebläse zum Strippen durch Gaseinspritzung. Hierbei findet sich eine entsprechende Vorrichtung in der Flüssigschwefelmasse, wobei es sich dabei bevorzugt um Düsen-/Strahlapparat-Vorrichtungen handelt, die günstigerweise am Boden der jeweiligen Kammern angeordnet sind.

Die Entgasungsprodukte werden zusammen mit den Spül- und Durchperlgasen aus den Kammern abgezogen, wobei hier bevorzugt ein Dampfstrahlsystem zur Verwendung kommt.

Die Entgasung kann bei Temperaturen zwischen 130 und 150 °C besonders erfolgreich durchgeführt werden, weshalb eine erfindungsgemäße Vorrichtung bevorzugt mit wenigstens einer Kühlvorrichtung ausgestattet ist. Als besonders günstig hat es sich dabei herausgestellt, wenigstens eine Kühlvorrichtung zwischen Pumpe und Einsprühung anzuordnen und so den Schwefel innerhalb des Rezirkulationsvorganges zu kühlen.
Zum Zweck der größeren Wirksamkeit kann auch ein Katalysator eingesetzt werden, der beispielsweise mit Hilfe einer Einspritzvorrichtung auf der Saugseite der Pumpe eingeführt wird.

Das erfindungsgemäße Verfahren und die Vorrichtung zur Durchführung dieses Verfahrens kommen insbesondere bei Flüssigschwefel zur Anwendung, der gelöste Verunreinigungen in Form von H₂S, H₂Sₓ, SO₂ und anderen möglicherweise vorkommenden Schwefelverbindungen enthält. Am häufigsten wird das Verfahren bei in Schwefelrückgewinnungsanlagen erzeugtem Schwefel angewandt, der aus den sauren Gasen stammt, die bei der Entschwefelung von Erdgas und Raffinationserdöl entstehen. In diesem Fall werden die Schwefelproduktionsanlagen (oder Claus-Produktionseinheiten) in Verbindung mit einer Restgasaufbereitungsanlage (TGT) ausgelegt. Diese Anlagen werden allgemein als "Claus-Anlagen" oder "Schwefelanlagen" bezeichnet. Die in diesen Anlagen aufbereiteten Sauergase bestehen im Wesentlichen aus H₂S, CO₂ und geringen Mengen an Kohlenwasserstoff. In den Erdölraffinerien kann ein Teil des Sauergases auch Ammoniak enthalten, was bei dem durch Strippen der Sauerwäsche entstehenden Sauergas der Fall ist. Der in diesen Claus-Anlagen erzeugte und gesammelte Flüssigschwefel enthält 250 bis 500 Gew.-ppm gelösten Gesamt-Schwefelwasserstoff in gebundener Form als Schwefelwasserstoff und Polyschwefelwasserstoffe.

Ebenso wird die Erfindung auf den sogenannten "FRASCH"-Schwefel angewandt, einen aus Bergwerken geförderten Elementarschwefel, der mit Hilfe des FRASCH-Verfahrens im flüssigen Zustand aus natürlichen Lagerstätten gewonnen wird. Dieser Schwefel, der ebenfalls Spuren von H₂S in einer Größenordnung von 100 bis 200 Gew.-ppm enthalten kann, eignet sich auch für dieses Entgasungsverfahren.

Weitere Merkmale, Vorteile und Anwendungsmöglichkeiten der Erfindung ergeben sich auch aus der nachfolgenden Beschreibung und der Zeichnung.

Es zeigen:
- Fig. 1: das grundsätzliche Reaktionsschema der Entgasung,
- Fig. 2: schematisch eine Ausgestaltung eines Batchreaktors,
- Fig. 3: schematisch eine Ausgestaltung eines kontinuierlichen Verfahrens,
- Fig. 4: schematisch eine erfindungsgemäße Ausgestaltung eines kontinuierlichen Verfahrens mit integrierter SO₂-Entgasung.

In Figur 1 sind die Reaktionen und Transportprozesse in einem Entgasungsprozess dargestellt. Man sieht innerhalb eines Behälters eine sich oberhalb des flüssigen Schwefels S (Iq.) befindende Gasphase GAS. In dem flüssigen Schwefel gelöstes H₂S kann durch Diffusion über drei verschiedene Austauschflächen in die Gasphase transportiert werden, nämlich 1: das Strippen des flüssigen Schwefels mit Gasperlen, 2: das Zerstäuben von flüssigem Schwefel in der oberhalb der flüssigen Phase angeordneten Gasphase und 3: an der Grenzfläche zwischen flüssiger und gasförmiger Phase. Grundsätzlich ist über die Grenzfläche zwischen Gas und Flüssigkeit auch ein Einbringen von H₂S aus der Gasphase in die Flüssigphase möglich. Gleichzeitig kann auf dem gleichen Weg SO₂ aus der Flüssigphase in die Gasphase überführt werden. Gelöstes H₂S in dem flüssigen Schwefel steht im Gleichgewicht mit der Bildung von Polyschwefelwasserstoffen. Aus dem Schwefelwasserstoff kann aus GAS, welches Sauerstoff enthält, durch Reaktion Wasser, Schwefel, SO₂ und SO₃ entstehen. Ähnliche Reaktionen erfolgen auch mit Polyschwefelwasserstoffen und Sauerstoff.

Figur 2 zeigt die Ausgestaltung der für eine diskontinuierliche Verfahrensführung in einem Batch-Reaktor. Dieser Reaktor weist einen Behälter 1 auf, der sich in die beiden Bereiche 2 und 3 teilt. Dabei ist der Bereich 2 als erster Bereich mit flüssigem Schwefel geflutet, während der zweite Bereich 3 mit Gas geflutet ist.

In den ersten Bereich 2 führt eine Leitung 11, durch die ein System zur Eindüsung von Stripping-Gas mit dem Stripp-Gas gespeist wird. Diese Eindüsungsvorrichtung 12 weist eine Vielzahl von Düsen auf, um eine feine Dispersion von Strip-Gas in dem flüssigen Schwefel zu erzeugen.

Weiterhin wird der zweite Bereich 3 mit Gas durchspült, welches über eine Leitung 13 einströmt und über Leitung 14 entweicht. Das Gas strömt dabei im wesentlichen parallel zur Oberfläche des flüssigen Schwefels. Mit dem über die Leitung 14 abgezogenen Gas werden auch die dem flüssigen Schwefel entzogenen gasförmigen Schwefelverbindungen ausgetragen.

Über Leitung 20 wird der Behälter mit flüssigem Schwefel befüllt. Diese Befüllung erfolgt nicht kontinuierlich, sondern zu Beginn des Verfahrens. Über das Pumpsystem 21 kann über Leitung 22 und 24 dem ersten Bereich flüssiger Schwefel entzogen und einer Zerstäubungsvorrichtung 25 zugeführt werden. Diese Zerstäubungsvorrichtung mündet in den zweiten Bereich 3 und zerstäubt dort den flüssigen Schwefel aus dem ersten Bereich 2 in den mit einer Gasmischung gefluteten zweiten Bereich 3.

Nach erfolgter Entgasung des Reaktors 1 kann über Leitung 22 und Leitung 23 unter Zuhilfenahme der Pumpe 21 der flüssige Schwefel aus dem Behälter 1 abgepumpt werden.

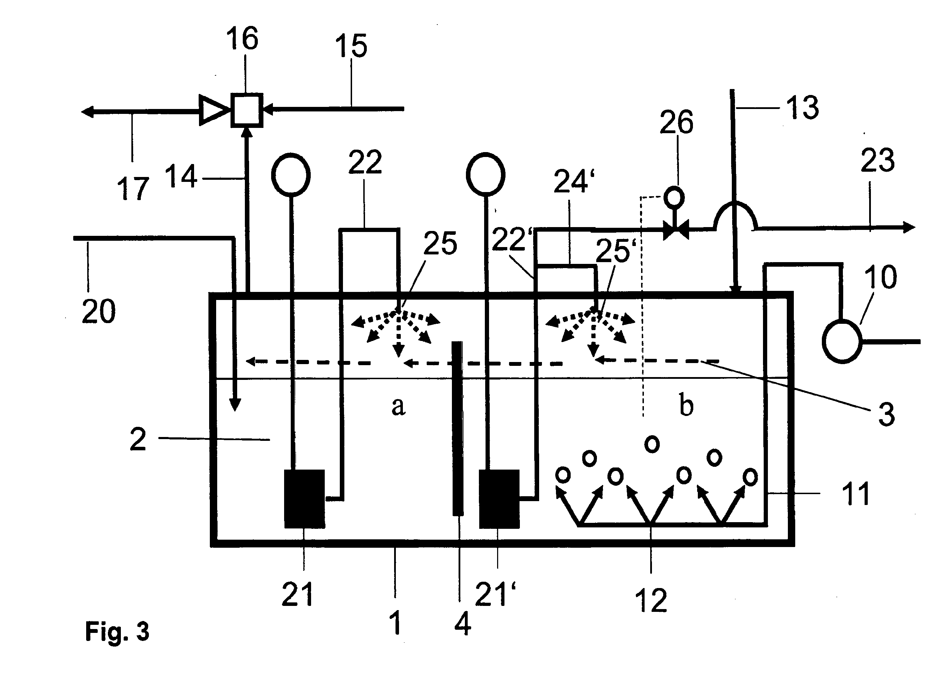

Figur 3 zeigt die Ausgestaltung einer Anlage zur Durchführung eines kontinuierlichen Verfahrens. Das Verfahren findet dabei in einem Behälter 1 statt, der einen mit flüssigem Schwefel gefluteten ersten Bereich 2 und einen mit Gas gefluteten zweiten Bereich 3 aufweist. Außerdem wird der Behälter 1 durch eine Trennwand 4 in zwei Kammern a,b geteilt, wobei die Trennwand 4 nicht bündig abschließt, so dass sowohl unterhalb als auch oberhalb der Trennwand 4 die beiden Kammern a,b über Öffnungen miteinander verbunden sind. Die Öffnung in Bodennähe erlaubt es dem Schwefel kontinuierlich von Kammer a zu Kammer b zu fließen; über die Öffnung oberhalb der Trennwand kann das Spülgas, bevorzugt im Gegenstrom, von Kammer b zu Kammer a fließen.

Über die Pumpe 10 und Leitung 11 wird ein Stripp-Gas der Eindüsungsvorrichtung 12 zugeführt, durch die mit mehreren Düsen Stripp-Gas in die zweite Kammer eingeblasen wird. Bevorzugt ist die Eindüsung für das Stripp-Gas am Boden der zweiten Kammer vorgesehen, es ist jedoch auch möglich, die Eindüsung in der ersten Kammer vorzunehmen oder in beiden Kammern. Die gezeigte Ausführungsform hat den Vorteil, dass in der ersten Kammer bereits die Mengen des gelösten Schwefelwasserstoffes und der Polyschwefelwasserstoffe abgesenkt wurden und nur zur Erreichung des gesetzlich vorgeschriebenen Grenzwertes von verbleibendem H₂S im entgasten Schwefel in der zweiten Kammer die zusätzliche Durchperlung vorgenommen wird. Dadurch wird die Anzahl der benötigten Durchperlungsvorrichtungen reduziert, bei Verwendung von Luft möglichst wenig Sauerstoff in das System eingetragen und gleichzeitig ein ausreichend gutes Ergebnis erzielt.

Über Leitung 13 wird weiterhin ein Gasstrom in den zweiten mit Gas gefluteten Bereich 3 eingebracht, der von der zweiten Kammer b aus im Gegenstrom zur Strömungsrichtung des Flüssigschwefels in die erste Kammer a strömt, aus welcher er über Leitung 14 abgezogen wird. Der Abzug erfolgt über eine entsprechende Abzugsvorrichtung, bevorzugt einen Dampfstrahler, der über Leitung 15 gespeist wird. Das enthaltene Gemisch aus den Gasströmen und gasförmigem H₂S wird dann über Leitung 17 ausgeschleust.

Flüssiger Schwefel wird kontinuierlich über Leitung 20 in die erste Kammer a des mit flüssigem Schwefel gefluteten ersten Bereichs 2 eingebracht. In diesem befindet sich in der ersten Kammer eine Pumpe 21, die über Leitung 22 aus dem ersten Bereich 2 flüssigen Schwefel abzieht und diesen der Zerstäubungsvorrichtung 25 zuführt. Diese Zerstäubungsvorrichtung 25 befindet sich in dem mit Gas gefluteten zweiten Bereich 3 der ersten Kammer. Der in Kammer a bereits teilweise entgaste flüssige Schwefel fließt dann in durch die in Bodennähe angeordnete Öffnung der Trennwand 4 in die Kammer b.

In der zweiten Kammer befindet sich ebenfalls eine Pumpe 21', die über Leitung 22' flüssigen Schwefel aus dem ersten Bereich 2 der zweiten Kammer entnimmt. Dieser wird teilweise über Leitung 24' einer zweiten Zerstäubungseinrichtung 25' zugeführt, die flüssigen Schwefel in der Gasphase 3 der zweiten Kammer zerstäubt. Weiterhin wird flüssiger Schwefel über Leitung 23 aus dem System abgezogen, wobei die abgezogene Menge der zugeführten Menge entspricht. Über eine Regelungsvorrichtung, beispielsweise ein Füllstand-Regelventil 26, kann die entnommene Menge von flüssigem Schwefel aus dem Bereich 2 des Behälters dahingehend geregelt werden, dass die Entnahmemenge so gering ist, dass die Gesamt-Verweilzeit des Schwefels ausreicht, um die geforderte gesetzliche Spezifikation von ≤ 10 Gew.-ppm H₂S zu erreichen. In nicht dargestellter Weise kann, bevorzugt über diese Entnahmemenge, Zufuhr des Schwefels über Leitung 20 geregelt bzw. gesteuert werden.

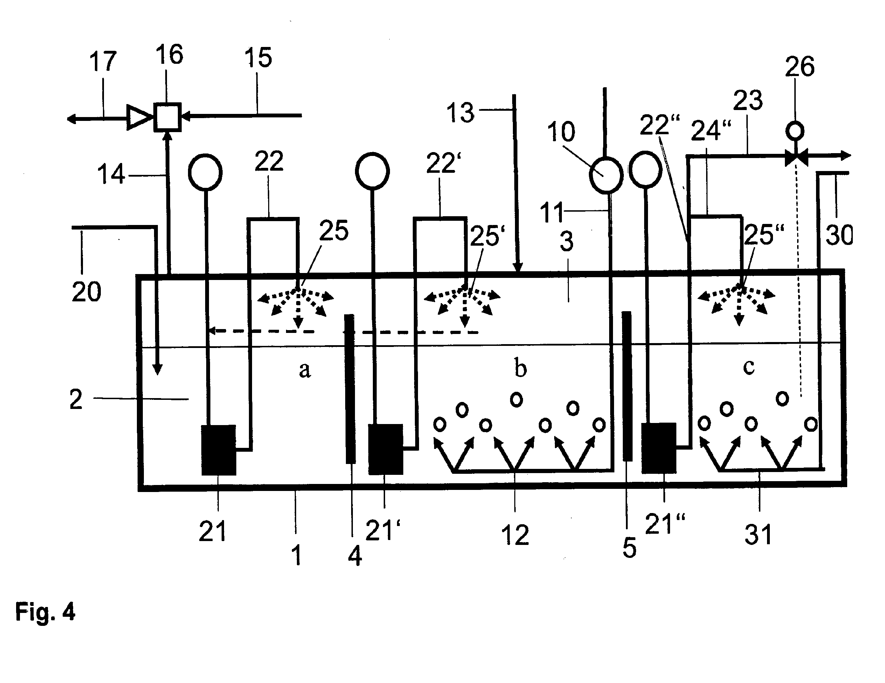

Fig. 4 zeigt ein erfindungsgemäßes kontinuierliches Verfahren zur gleichzeitigen Entgasung von H₂S und SO₂. Auch dieses Verfahren wird in einem Behälter 1 durchgeführt, der einen mit Schwefel gefluteten ersten Bereich 2 und einen mit Gas gefluteten zweiten Bereich 3 aufweist. Der Behälter ist durch zwei Trennwände 4 und 5 in drei Kammer a, b und c geteilt, wobei die ersten beiden Kammern a und b für die H₂S-Entfernung verwendet werden und die dritte Kammer c zu SO₂-Entfernung bestimmt ist. Die Trennwände 4 und 5 sind so angebracht, dass Öffnungen unter- und oberhalb der Trennwände entstehen, indem keine Abgrenzung vorhanden und so ein freies Durchströmen von Gas bzw. Schwefel möglich ist, wobei Schwefel und Gas bevorzugt im Gegenstrom geführt werden.

Über die Pumpe 10 und Leitung 11 wird ein erstes Stripping-Gas, bevorzugt Luft, der Eindüsungsvorrichtung 12, günstiger Weise eine Vielzahl von Düsen, zugeführt. Diese Einbringung des Stripping-Gases erfolgt dabei in der zweiten Kammer b. In diese zweite Kammer b wird auch über Leitung 13 ein Gasstrom in den zweiten, mit Gas gefüllten Bereich 3 eingeblasen. Der Gesamtfluss der Gase, die über Leitungen 11 und 13 eingebracht werden, durchströmt dann den Bereich 3 der Kammer a und wird über Leitung 14 wieder aus dem Behälter 1 abgeführt und trägt dabei auch das aus dem flüssigen Schwefel abgezogene H₂S aus. Diese Leitung 14 mündet in eine Abzugsvorrichtung 16, die bevorzugt als Dampfstrahler bzw. Ejektor ausgestaltet ist, der durch Leitung 15 mit dem Treibmittel gespeist wird. Über Leitung 17 kann dann die Gesamtgasmenge des Verfahrens endgültig ausgeschleust werden.

Über Leitung 20 wird in die erste Kammer a flüssiger, zu entgasender Schwefel eingebracht. Dieser Schwefel wird in der ersten Kammer a über die Pumpe 21 in Leitung 22 rezirkuliert, die in eine Zerstäubungseinrichtung 25 mündet. Diese Zerstäubungseinrichtung 25 befindet sich in dem zweiten Bereich 3 der ersten Kammer a.

Dieselbe Vorrichtung zur Rezirkulation und Zerstäubung des Schwefels findet sich auch in der zweiten Kammer b, wo eine Pumpe 21' flüssigen Schwefel über Leitung 22' einer Zerstäubungseinrichtung 25' zuführt, die den flüssigen Schwefel in dem zweiten, mit Gas gefluteten Bereich 3 der zweiten Kammer b zerstäubt.

Schließlich beinhaltet die Vorrichtung erfindungsgemäß auch eine dritte Kammer c für die Entfernung von SO₂, die auf die gleiche Weise mit einer Zerstäubungs- und Rezirkulationspumpe 21" ausgestattet ist, die über Leitung 22" und Leitung 24 die Zerstäubungseinrichtung 25" speist. Die Zerstäubungsvorrichtung 25" ist in der Gasphase 3 der dritten Kammer c vorgesehen. Gleichzeitig können über Leitung 22" und 23 Teile des flüssigen Schwefels, der nun entgast ist, aus dem Behälter 1 abgezogen werden.

Der Fluss des entgasten Schwefels, der abgezogen wird, entspricht dabei der Menge des über Leitung 20 zugeführten Roh-Schwefels. Dies kann über eine Regelvorrichtung wie etwa das Füllstand-Regelventil 26 in der Austrittsleitung 23 erfolgen. Dieses Regelventil stellt dabei kontinuierlich den Füllstand im behälter 1 so ein, dass diejenige Verweilzeit eingestellt wird, die zum Erreichen der gesetzlich vorgeschriebenen Spezifikationen von verbleibendem Rest-H₂S und -SO₂ nötig ist.

Schließlich wird in die dritte Kammer c über Leitung 30 ein Stripp-Gas in eine Eindüsungsvorrichtung 31 eingebracht. Diese Eindüsungsvorrichtung 31 ist mit einer Vielzahl von Düsen am Boden der flüssigen Phase ausgestattet und stellt so eine geeignete Dispersion des Stripp-Gases durch die Schwefelmasse sicher. Bei diesem Stripp-Gas handelt es sich um Inertgas, wie Stickstoff, während über das Gebläse 10 und die Leitung 11 Luft eingeblasen wird.

Bei dem über die Leitung 13 eingebrachten Gasstrom handelt es sich bevorzugt um Luft.

Das Strip-Gas der Kammer c wird über Leitung 30 eingebracht. Nachdem es den flüssigen Schwefel in Kammer c durchperlt hat, gelangt es in die Gasphase der Kammer b. Dort mischt es sich mit dem über Leitung 11 eingebrachten aufströmenden Strip-Gas der Kammer b sowie dem über Leitung 13 eingebrachten, bevorzugt im Gegenstrom strömenden Spülgas. Die entstehende Gasmischung wird dann zur Gasphase der Kammer a geführt. Der Gesamtfluss der in den Behälter eingebrachten Gase wird über eine geeignete Abzugsvorrichtung 16 abgezogen, wobei diese Abzugsvorrichtung 16 bevorzugt als Dampfstrahler ausgebildet ist, der über Leitung 15 mit Dampf gespeist wird. Die gesamte Gasmischung, welche das entfernte H₂S und SO₂ enthält, wird dann über Leitung 17 entfernt.

## Patentansprüche

1. Verfahren zur Entgasung von flüssigem Schwefel in einem Behälter, wobei die Entgasung in verschiedenen, nicht vollständig voneinander abgeschlossenen Kammern durchgeführt wird und jede Kammer einen ersten Bereich mit flüssigem Schwefel und einen zweiten mit einem Gas gefluteten Bereich aufweist, wobei ein Gasstrom in den jeweils ersten Bereich der Kammern eingedüst wird, und wobei flüssiger Schwefel jeweils aus dem ersten Bereich einer Kammer in den zweiten Bereich derselben Kammer gepumpt und dort eingesprüht wird, dadurch **gekennzeichnet,** dass in der ersten Kammer ein sauerstoffhaltiges Gas als eingedüster Gasstrom zur Entfernung von H₂S und in wenigstens einer der ersten Kammer nachgeschalteten Kammer Inertgas zur Entfernung von SO₂ als eingedüster Gasstrom verwendet wird.

2. Verfahren nach Anspruch 1, **dadurch gekennzeichnet**, **dass** der in den ersten Bereich eingedüste Gasstrom und/oder das den zweiten Bereich flutende Gas sich entweder inert gegenüber H₂S, Sulfanen und/oder Schwefel verhält oder ein sauerstoffhaltiges Gas ist.

3. Verfahren nach einem der vorhergehenden Ansprüche, dadurch ge**kennzeichnet,** dass der zweite Bereich der wenigstens einen ersten Kammer mit einem weiteren Gasstrom durchströmt wird.

4. Verfahren nach Anspruch 1, dadurch **gekennzeichnet,** dass das Einsprühen des flüssigen Schwefels im Gegenstrom zu dem den zweiten Bereich durchströmenden Gasstrom erfolgt.

5. Verfahren nach einem der vorhergehenden Ansprüche, dadurch ge**kennzeichnet,** dass der flüssige Schwefel auf einer Temperatur von 120 bis 140 °C, vorzugsweise 130 bis 135 °C, gehalten wird.

6. Vorrichtung zur Entgasung von flüssigem Schwefel mit einem Behälter (1), wobei der Behälter (1) durch eine Trennwand (5) in wenigstens zwei nicht vollständig voneinander abgeschlossene Kammern (b, c) geteilt, und in einem ersten Bereich (2) mit flüssigem Schwefel und in einem zweiten Bereich (3) mit Gas flutbar ist, mit einer in den zweiten Bereich (3) der ersten Kammer (b) mündenden ersten Vorrichtung (25') zum Einsprühen von flüssigem Schwefel, wobei die erste Vorrichtung (25') zum Einsprühen von flüssigem Schwefel über eine Leitung (22') mit einer aus dem ersten Bereich (2) der ersten Kammer (b) gespeisten Pumpe (21') verbunden ist, und mit einer in den zweiten Bereich (3) der der ersten Kammer nachgeschalteten Kammer (c) mündenden zweiten Vorrichtung (25") zum Einsprühen von flüssigem Schwefel, wobei die zweite Vorrichtung (25") zum Einsprühen von flüssigem Schwefel über eine Leitung (22") mit einer aus dem ersten Bereich (2) der der ersten Kammer nachgeschalteten Kammer (c) gespeisten Pumpe (21 ") verbunden ist, **gekennzeichnet** durch wenigstens eine erste Vorrichtung (12) zur Eindüsung eines sauerstoffhaltigen Gases in den flüssigen Schwefel im ersten Bereich (2) der ersten Kammer (b) und wenigstens eine zweite Vorrichtung (31) zur Eindüsung eines Inertgases in den flüssigen Schwefel im ersten Bereich (2) der der ersten Kammer nachgeschalteten Kammer (c).

7. Vorrichtung nach Anspruch 7, **gekennzeichnet** durch eine aus dem ersten Bereich (2) gespeisten Pumpe (21'), die Vorrichtung (25') zum Einsprühen von flüssigem Schwefel über eine Leitung (22') mit verbunden ist.

8. Vorrichtung nach Anspruch 7 oder 8, dadurch **gekennzeichnet,** dass in dem zweiten Bereich (3) eine Zuleitung (13) und eine Auslassleitung (14) für einen weiteren Gasstrom vorgesehen sind.

## Claims

1. A method for degassing liquid sulphur in a container, wherein the degassing is performed in various chambers not fully separated from each other and each chamber has a first area with liquid sulphur and a second area flooded with a gas, wherein a gas flow is injected into the first area of each of the chambers, and wherein liquid sulphur is pumped from the first area of each chamber into the second area of the same chamber, where it is sprayed in, **characterised in that** a gas containing oxygen is used in the first chamber as injected gas for removing H₂S and an inert gas is used in at least one chamber downstream of the first chamber as injected gas for removing SO₂.

2. The method according to Claim 1, **characterised in that** the gas flow injected into the first area and/or the gas flooding the second area either behaves/behave in a manner inert with respect to H₂S, sulfanes and/or sulphur or is/are a gas containing oxygen.

3. The method according to one of the preceding claims, **characterised in that** a further gas flow flows through the second area of the at least one first chamber.

4. The method according to Claim 1, **characterised in that** the liquid sulphur is sprayed in in counterflow to the gas flow flowing through the second area.

5. The method according to one of the preceding claims, **characterised in that** the liquid sulphur is kept at a temperature from 120 to 140 °C, preferably 130 to 135 °C.

6. A device for degassing liquid sulphur, comprising a container (1), wherein the container (1) is divided by a partition wall (5) into at least two chambers (b, c) not fully separated from one another and a first area (2) can be flooded with liquid sulphur and a second area (3) can be flooded with gas, comprising a first device (25') leading into the second area (3) of the first chamber (b) in order to spray in liquid sulphur, wherein the first device (25') in order to spray in liquid sulphur is connected via a line (22') to a pump (21') fed from the first area (2) of the first chamber (b), and comprising a second device (25"), leading into the second area (3) of the chamber (c) downstream of the first chamber, for spraying in liquid sulphur, wherein the second device (25'') for spraying in liquid sulphur is connected via a line (22'') to a pump (21'') fed from the first area (2) of the chamber (c) downstream of the first chamber, **characterised by** at least one first device (12) for injecting a gas containing oxygen into the liquid sulphur in the first area (2) of the first chamber (b) and at least one second device (31) for injecting an inert gas into the liquid sulphur in the first area (2) of the chamber (c) downstream of the first chamber.

7. The device according to Claim 7, **characterised by** a pump (21') fed from the first area (2), the device (25') for spraying in liquid sulphur being connected via a line (22').

8. The device according to Claim 7 or 8, **characterised in that** an inlet line (13) and an outlet line (14) for a further gas flow are provided in the second area (3).

## Revendications

1. Procédé de dégazage de soufre liquide dans un récipient, ledit dégazage étant réalisé dans différentes chambres lesquelles ne sont pas complètement fermées les unes par rapport aux autres, et chaque chambre comportant une première zone renfermant du soufre liquide et une deuxième zone remplie d'un gaz, un flux de gaz étant injecté dans la première zone de chacune des chambres, et du soufre liquide étant pompé depuis la première zone de chacune des chambres dans la deuxième zone de la chambre concernée pour y être introduit par nébulisation, **caractérisé en ce que** l'on utilise dans la première chambre un gaz contenant de l'oxygène en tant que flux de gaz injecté, pour ainsi dégager du H₂S, et dans au moins une chambre située en aval de la première chambre on utilise d'un gaz inerte en tant que flux de gaz injecté, pour ainsi dégager du SO₂.

2. Procédé selon la revendication 1, **caractérisé en ce que** le flux de gaz injecté dans la première zone et/ou le gaz remplissant la deuxième zone est soit inerte vis-à-vis de H₂S, de sulfanes et/ou du soufre soit il est un gaz contenant de l'oxygène.

3. Procédé selon l'une des revendications précédentes, **caractérisé en ce que** la deuxième zone de l'au moins une première chambre est traversée par un autre flux de gaz.

4. Procédé selon la revendication 1, **caractérisé en ce que** le soufre liquide est introduit par nébulisation à contre-courant, par rapport au flux de gaz traversant la deuxième zone.

5. Procédé selon l'une des revendications précédentes, **caractérisé en ce que** le soufre liquide est maintenu à une température comprise entre 120 et 140 °C, de préférence entre 130 et 135 °C.

6. Dispositif de dégazage de soufre liquide comportant un récipient (1), le récipient (1) étant divisé par une cloison (5) en au moins deux chambres (b, c), lesquelles ne sont pas complètement fermées les unes par rapport aux autres, et pouvant être rempli avec du soufre liquide en ce qui concerne une première zone (2) et avec du gaz en ce qui concerne une deuxième zone (3), comportant un premier dispositif (25') débouchant dans la deuxième zone (3) de la première chambre (b) pour permettre d'y introduire par nébulisation du soufre liquide, le premier dispositif (25') lequel permet une introduction par nébulisation de soufre liquide étant relié à travers une conduite (22') à une pompe (21') alimentée à partir de la première zone (2) de la première chambre (b), et comportant un deuxième dispositif (25") débouchant dans la deuxième zone (3) de la chambre (c) située en aval de la première chambre pour permettre d'y introduire par nébulisation du soufre liquide, le deuxième dispositif (25") lequel permet une introduction par nébulisation de soufre liquide étant relié à travers une conduite (22") à une pompe (21") alimentée à partir de la première zone (2) de la chambre (c) située en aval de la première chambre, **caractérisé par** au moins un premier dispositif (12) permettant l'injection d'un gaz contenant de l'oxygène dans le soufre liquide dans la première zone (2) de la première chambre (b) et au moins un deuxième dispositif (31) permettant l'injection d'un gaz inerte dans le soufre liquide dans la première zone (2) de la chambre (c) située en aval de la première chambre.

7. Dispositif selon la revendication 7, **caractérisé par** une pompe (21') alimentée à partir de la première zone (2), le dispositif (25') lequel permet l'introduction par nébulisation de soufre liquide y étant relié à travers à une conduite (22').

8. Dispositif selon les revendications 7 ou 8, **caractérisé en ce que** la deuxième zone (3) est pourvue d'une conduite d'entrée (13) et d'une conduite de sortie (14) destinées à un flux de gaz supplémentaire.
